(19) Europäisches Patentamt
European Patent Office
Office européen des brevets

(11) **EP 2 562 525 A2**

(12) **EUROPEAN PATENT APPLICATION**

(43) Date of publication:
**27.02.2013 Bulletin 2013/09**

(51) Int Cl.:
***G01L 11/02*** *(2006.01)*

(21) Application number: **12180476.9**

(22) Date of filing: **14.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.08.2011 US 201113216439**

(71) Applicant: **General Electric Company
Schenectady, NY 12345 (US)**

(72) Inventors:
• **Badami, Vivek Venugopal
  Schenectady, NY 12345 (US)**
• **Mitra, Chayan
  Schenectady, NY 12345 (US)**

(74) Representative: **Cleary, Fidelma
GE International Inc.
Global Patent Operation-Europe
15 John Adam Street
London WC2N 6LU (GB)**

(54) **Systems and methods for making temperature and pressure measurements utilizing a tunable laser diode**

(57)    A system (100) for measuring a dynamic pressure in a gas using a tunable diode laser (120). The system (100) of this aspect includes a laser transmission system (102) that includes the tunable diode laser (120) and configured to transmit laser light created by the tunable diode laser (120) through the gas and a laser receiving system (104) configured to receive the laser light after it has passed through the gas to create absorption peaks from the received laser light. The laser receiving system (104) is configured to estimate a change in pressure based on an expansion of one of the absorption peaks.

FIG. 1

**Description**

BACKGROUND OF THE INVENTION

The subject matter disclosed herein relates to pressure measurements and, in particular, to pressure measurement in a hot gas path.

Gas turbines are utilized in the production of electricity. The typical gas turbine includes a compressor to draw in and compress air. The compressed air is combined with fuel and burned in a combustor (or burner) to create a flow of hot gas. The hot gas is provided to a turbine section where it causes a rotation of a rotor. The rotor, in turn, provides mechanical energy to a generator to produce electricity.

The temperature and pressure of the flow of hot gas can affect operation of the turbine. Accordingly, several different types of temperature and pressure measurement sensors have been developed. A typical pressure sensor includes a diaphragm and strain gauges. Changes in pressure cause the diaphragm to deform and the deformation is measured by the strain gauges. Due to the heat inside the turbine, pressure sensors include a transducer located outside of the turbine and a probe within the turbine that directs the gas to the transducer.

BRIEF DESCRIPTION OF THE INVENTION

According to one aspect of the present invention, a system for measuring a dynamic pressure in a gas using a tunable diode laser is disclosed. The system of this aspect includes a laser transmission system that includes the tunable diode laser and configured to transmit laser light created by the tunable diode laser through the gas and a laser receiving system configured to receive the laser light after it has passed through the gas to create absorption peaks from the received laser light. The laser receiving system is configured to estimate a change in pressure based on an expansion of one of the absorption peaks.

According to another aspect of the present invention, a method of measuring temperature and pressure of a gas using a tunable diode laser is disclosed. The method includes passing laser light having three different frequencies through the gas; measuring the intensity of the laser light at each of three different frequencies after it has passed through the gas; forming a first, second and third peak profile from the measured intensities; determining the line strength for the first and second peak profiles; and estimating a dynamic pressure change of the gas based on changes in the width of the third peak profile.

These and other advantages and features will become more apparent from the following description taken in conjunction with the drawings.

BRIEF DESCRIPTION OF THE DRAWINGS

Embodiments of the present invention will now be described, by way of example only, with reference to the accompanying drawings in which:

FIG. 1 illustrates a tunable diode laser system according to one embodiment;

FIG. 2 illustrates the broadening effects of pressure on an absorption peak;

FIG. 3 is a graph relating an amount of broadening of an absorption peak to a change in pressure; and

FIG. 4 is a flow chart illustrating a method of determining temperature and pressure of a gas according to one embodiment.

The detailed description explains embodiments of the invention, together with advantages and features, by way of example with reference to the drawings.

DETAILED DESCRIPTION OF THE INVENTION

Embodiments of the present invention are directed to systems and methods for utilizing a tunable laser diode to measure both temperature and pressure in a turbine. In one embodiment, three different absorption peaks are selected. Two of the peaks are utilized to measure the temperature of a gas in the turbine and an amount of expansion of the third peak is utilized to measure the pressure of the gas.

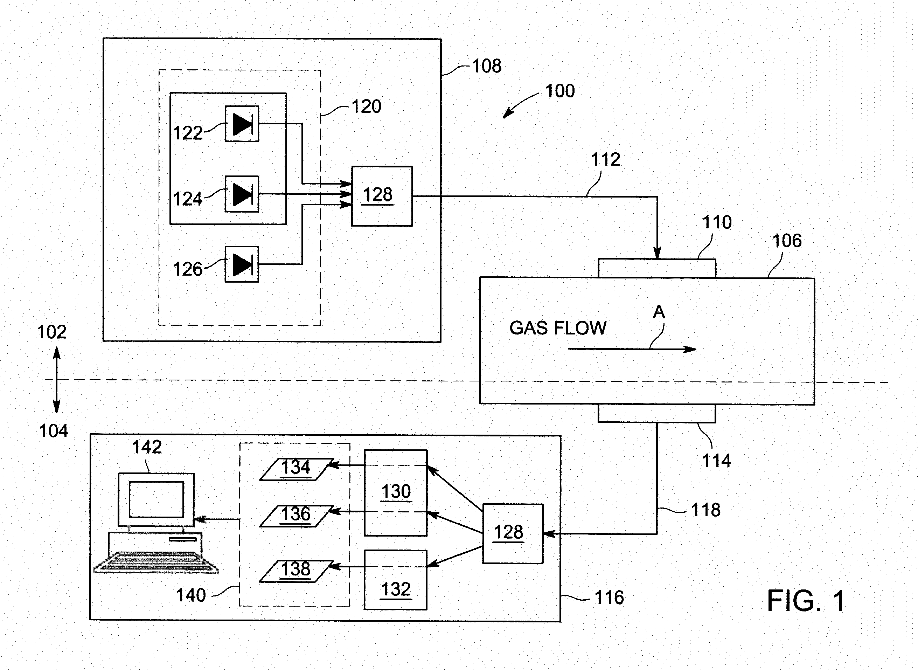

Referring now to FIG. 1, a system 100 for measuring temperature and pressure in a turbine includes a laser transmission system 102 and a laser receiving system 104. The laser transmission system 102 provides laser energy in the form of light to a sample chamber 106. The sample chamber 106 can include a material in the form of a gas that can be static or moving. In an illustrative embodiment, the sample chamber 106 is a portion of a gas turbine system and can be formed, for example, in a hot-gas path provided by a combustor of the gas turbine system. In one embodiment, the laser transmission system 102 is arranged and configured such that it can provide the laser light without affecting the flow of material through the sample chamber.

The laser light provided by the laser transmission system 102 travels through the material in the sample chamber 106 and is received by the laser receiving system 104. The laser receiving system 104 can include elements that allow it to receive laser light, determine its intensity across a frequency band and, from intensity, determine one or both of the temperature and pressure of the gas in the sample chamber 106.

The gas in the sample chamber 106 can cause certain wavelengths of the laser light provided by the laser transmission system 102 to be absorbed. Accordingly, the laser receiving system 104 will receive only a portion of the laser light transmitted into the sample chamber 106 if the gas absorbs one or more of the wavelengths transmitted through it.

In one embodiment, the laser transmission system 102 includes a laser producer 108 that provides laser light to a laser input 110 coupled to the sample chamber 106. In the illustrated embodiment, the laser producer 108 and the laser input 110 are separate from one another and coupled to one another by an input transmission line 112. The input transmission line 112 can be a fiber optic cable or other connector that can carry laser light. Of course, the laser producer 108 and the laser input 110 could be formed as a single element and the input transmission line 112 either omitted or contained within the single element.

The laser input 110 is coupled to the sample chamber 110 such that it can direct the laser light it receives from the input transmission line 112 through at least a portion of the gas in the sample chamber 106 and such that at least a portion of the laser light can be detected by the laser receiving system 104. In one embodiment, the laser input 110 is coupled to the sample chamber 106 such that it does not alter or otherwise affect the flow of the gas through the sample chamber 106.

The laser receiving system 104 includes a laser receiver 114 coupled to the sample chamber 106. The laser input 110 and the laser receiver 114 form a transmitter/receiver pair. As illustrated, the laser input 110 and the laser receiver 114 are disposed on opposite sides of the sample chamber 106. It shall be understood that such a configuration is merely illustrative and the precise orientation can be varied based on the context. For example, the laser input 110 and the laser receiver 114 could be on the same side of the sample chamber 106 with a mirror or other reflecting element disposed in or on the sample chamber 106 such that the laser light provided by the laser input 110 travels through the gas and is then reflected back to the laser receiver 114.

The laser receiving system 104 also includes an evaluation subsystem 116 configured to evaluate the laser light received by the laser receiver 114. To that end, in one embodiment, the evaluation subsystem 116 can be coupled to the laser receiver 114 by a receiver transmission line 118. The receiver transmission line 118 can be a fiber optic cable or other connector that can carry laser light. Of course the laser receiver 114 and the evaluation subsystem 116 could be formed as a single element and the receiver transmission line 118 either omitted or contained within the single element.

In one embodiment, the laser transmission system 108 includes a tunable diode laser 120. The tunable diode laser 120 can produce laser light at a variety of frequencies. In one embodiment, the tunable diode laser 120 produces laser light having wavelengths surrounding at least three distinct frequencies/wavelengths. In FIG. 1, the tunable diode laser 120 is illustrated as including three different diode lasers 122, 124, 126. Each of these diode lasers provides laser energy over different frequency ranges in one embodiment. It shall be understood that while three separate diode lasers 122, 124, 126 are illustrated in FIG. 1, the tunable diode laser 120 could include a single diode laser capable of sweeping the three different frequency ranges of the diode lasers 122, 124, 126. In one embodiment, the tunable laser diode 120 includes an input selector such as optical multiplexer 128 that selects and couples the laser energy created by one or more of the diode lasers 122, 124, 126 to the input transmission path 112. In one embodiment, the diode lasers 122, 124, 126 can produce light having frequencies that sweep over a frequency range surrounding a center frequency. In one embodiment, the frequencies ranges for the diode lasers 122, 124, 126 are selected such that they do not overlap one another.

The system 100 works on the principle that the temperature and pressure of the gas through which the laser light provided by the laser input 110 passes affects the absorption of the laser light. In one embodiment, the wavelength of the light provided by the diode lasers 122, 124, 126 is chosen based on the gas being examined. In one embodiment, the gas is the hot gas passing out of a combustor in a gas turbine. Temperature is measured by the ratio of line strengths of two absorption peaks of the gas and the width of the absorption peaks is dependent on the pressure of the gas. The greater the pressure, the wider the absorption band. This pressure broadening results in inaccuracies in the estimation of the absorption peaks, reducing the accuracy of the measurement. However, according to the teachings herein, this phenomenon can be used to estimate pressure in parallel with the measurement of temperature using a single system. Accordingly, a technical effect of embodiments disclosed herein is that it allows a single, non-intrusive sensor to measure pressure and temperature of a hot gas. Further, because the laser light passes through the gas path, the pressure measurement is a path averaged value rather than a single point estimate as in the prior art. Such an average can be more useful in many cases, where an average temperature is required, because hot gas flows in gas turbines are typically nonuniform over an axial cross-section.

The evaluation subsystem 116 includes a destination selector (illustrated as an optical demultiplexer 128) that provides the laser light received by the laser receiver 114 to either a temperature subsystem 130 or a pressure subsystem 132. In particular, energy (e.g., light) having a frequency in the range produced by the first and second diode lasers 122 and 124 is provided to the temperature subsystem 130 and light having a frequency in the range provided by the third diode laser 126 is provided to the pressure subsystem 132. From each frequency range a peak profile 134, 136, 138 can be created by the temperature and pressure subsystems 130, 132. Of course, a single element could produce all of these profiles and the profiles are collectively referred to as peak profiles 140. Of course, the number of profiles that comprise peak profiles 140 can vary from two to any number but three is used for ease of explanation. The peak profiles 140 are passed to a computing device 142 that can form estimates of temperature and pressure from them. The line strengths of the two of the peak profiles (e.g., peak profiles 134 and 136) can be compared to create an estimate of temperature in a known manner.

In one embodiment, the peak profiles 134, 136, 138 have predefined scan ranges. For example, each peak profile can have a range that covers frequencies related to wavelengths that vary by a fixed amount (e.g., 900nm) and centered at the peak center frequency.

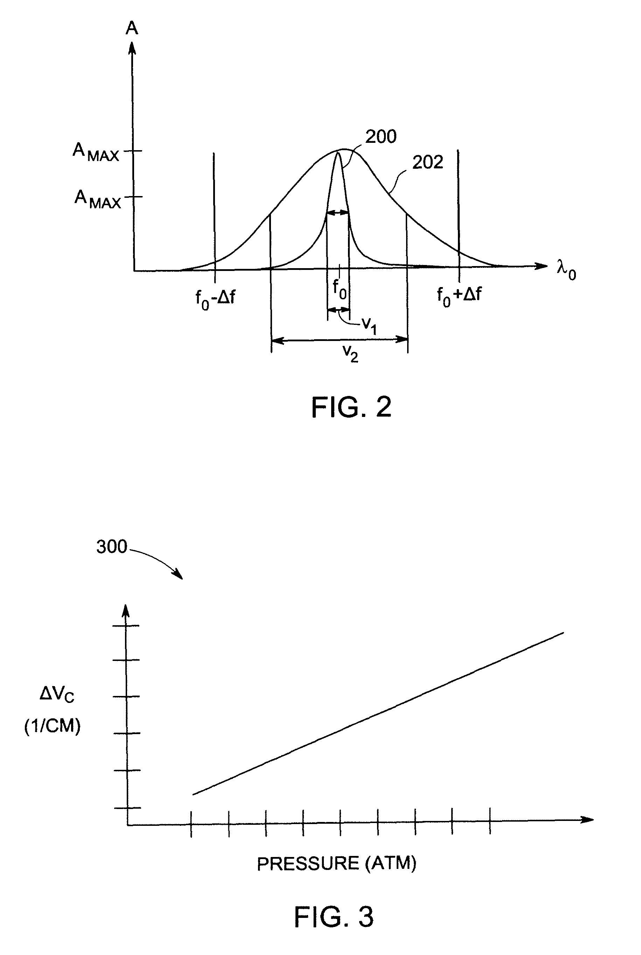

FIG. 2 illustrates an absorption peak 200 and a broadened peak 202 that represents the same peak at a different, increased, pressure. The absorption peak 200 has a center frequency $f_0$ and is located with a scan range that extends between $f_0 - \Delta f$ and $f_0 + \Delta f$. In one embodiment, the frequency ranges extends between frequencies corresponding to light having wavelengths between 1.3 and 1.4$\mu$m. It shall be understood that any measurement disclosed herein with respect to frequency can be expressed in terms of wavelength and vice versa. The absorption peak 200 has a FWHM (full width at half maximum) illustrated as $v_1$. Similarly, the broadened peak 202 has a FWHM illustrated as $v_2$. The difference between $v_2$ and $v_1$ is the combined effect of both pressure and temperature and shall be referred to herein as $\Delta v_v$. The value of $\Delta v_v$ can mathematically be determined by solving the Voigt profile as is known in the art.

In optical absorption spectroscopy, the Beer-Lambert's equation describes the ratio of intensity of light transmitted to light received (e.g., how much light is absorbed by a material). For gases, the Beer-Lambert's equation can generally be expressed as shown in equation 1:

$$\left(\frac{I_t}{I_0}\right)_v = e^{-A} \qquad (1)$$

where $I_t$ and $I_0$ are the intensity of transmitted and received light, and A is the unit less absorbance of the gas. The value of A is defined as shown below in equation 2:

$$A = -\ln\left(\frac{I_t}{I_0}\right) = Px_{abs}L\sum S_i(T)\phi_{v,i}(T, P, x_{abs}, \gamma, \delta) \qquad (2)$$

where L is the distance traveled by the light, P is the pressure of the gas, $x_{abs}$ is the concentration of the gas, S(T) is a temperature dependent line strength and $\phi$ is a line shape function. In the above equation it can be observed that the line shape function $\phi$ is affected by both T and P. Generally, the Voigt profile defines the broadening of a line in terms of both temperature and pressure. In particular, the Voigt profile is a combined expression describing the effects of temperature (Doppler broadening) and pressure (collision or "Lorentzian" broadening). The change in full width at half magnitude (FWHM) of a peak based on temperature and can be expressed as:

$$\Delta v_D = 7.1623.10^{-7} f_0 * (T/M)^{1/2} \qquad (3)$$

where M is the mass of the molecular weight of the probed species (e.g., water or oxygen in a combustion gas. Similarly, the shape of the line can be affected by pressure caused by Lorentzian broadening where the change in FWHM width due to pressure can be expressed as:

$$\Delta v_c = P \sum X_j 2\gamma_j \qquad (4)$$

where $\gamma$ is a broadening coefficient of the gas and is dependent on temperature. One of ordinary skill will realize from the above that $\Delta v_c$ is directly proportional to pressure. Accordingly, the dynamic changes in pressure of a gas can be determined by measuring the FHWM width, $\Delta v_c$.

FIG. 3 illustrates a conversion graph 300 that relates $\Delta v_c$ (measured in cm$^{-1}$) to a pressure (measured in atmospheres) according to equation 4. In this example, it is assumed that temperature is at a constant value. Such a graph 300 can be created for a range of temperatures. As one of ordinary skill will realize, the graph 300 in FIG. 3 is not required and the relationship between P and $\Delta v_c$ can be derived based on a measured temperature, the concentration of the material and the broadening coefficient of the material according to equation 4. Of course, the exact solution may require compensation for center frequency shift due to temperature.

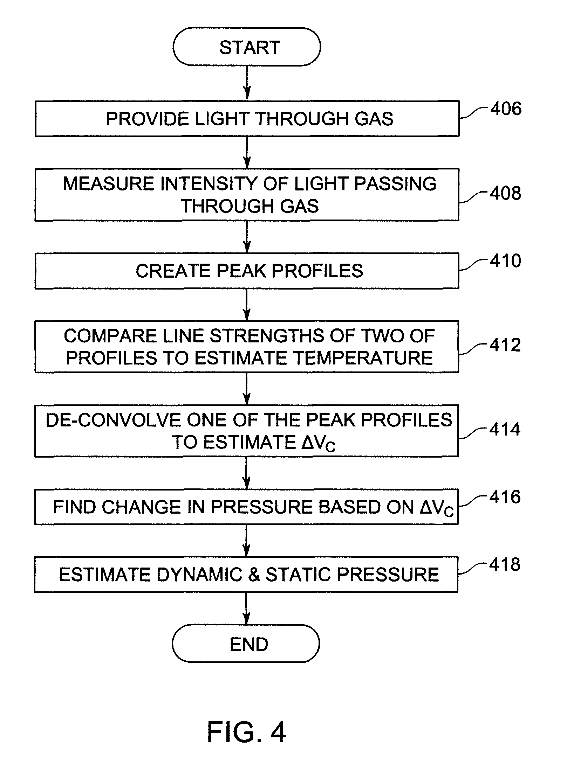

FIG. 4 is flow chart illustrating a method according to one embodiment. It shall be understood that the method in FIG. 4 can be performed after three absorption lines for a gas of interest are selected and a tunable diode laser is selected that can produce light in each of the three selected frequencies The method begins at block 406, the tunable diode laser produces laser light that spans all three frequencies and transmits it through the gas. In one embodiment, the laser first produces light in a frequency range surrounding the first frequency, then the second frequency, and then the third frequency. In such an embodiment, the three frequency ranges preferably do not overlap. In another embodiment, the laser can produce a single sweep over all three frequencies.

At block 408 the intensity of the light passing through the gas is measured for each sweep and, at block 410 two or more peak profiles are created. In one embodiment, each peak profile represents the absorption surrounding a particular frequency of interest.

At block 412 the line strength of two of the peak profiles are compared to estimate a temperature of the gas. Of course, this block could include determining the line strength of some or all of the peak profiles. At block 414 the third peak profile can be de-convolved to create an estimate of $\Delta v_c$. This can include, for example, removing the Doppler effects ($\Delta v_d$) from the Voigt profile from the measured $\Delta v_v$ value. Of course, estimation of $\Delta v_c$ may require correcting for shifts in line location due to temperature.

In more detail, the temperature shifts can serve two purposes. First, the temperature measurement can be used as a correction factor for pressure broadening at very high temperature. At high temperature there is usually a frequency shift (in the order of several MHz) of the absorption spectra. The frequency shift is estimated using the equation given by equation (5) below:

$$\delta_j(T) = \delta_j(T_0)\left(\frac{T_0}{T}\right)^{m_j} \qquad (5)$$

where, $T_0$ is the reference temperature, usually taken at a lower value but much above room temperature and $m_j$ is the temperature shift exponent (obtained from a HITRAN database). The baseline is corrected with the estimated frequency shift using equation 5 above and then the actual calculation for pressure measurement is done. Second, the line strength of the laser at a particular wavelength generally decreases with temperature. So the temperature measurement at the same location helps in estimating the line-strength at that location. Also this helps in estimating the collisional line-width.

In one embodiment, after the temperature is estimate, the estimation of dynamic pressure at the same location can be carried out (block 414). This is an iterative process. Any dynamic variation in pressure (several psi's over a base pressure of ~5atm to 10atm) will result in line broadening in the range of several kHz. The temperature measurement is insensitive to the changes in line broadening as it is a ratiometric method.

At block 416 $\Delta v_c$ can be utilized to determine an actual change in pressure. To that end, a graph correlating $\Delta v_c$ to a change in pressure at a particular temperature such as shown for example in FIG. 3 can be utilized. It shall be understood that the graph shown in FIG. 3 can be modified to take into account a frequency shift due to temperature $\Delta v_s$.

At block 418 the absolute pressure can be determined by solving the Beer-Lambert equation with the value of temperature, the change in pressure and the line strength of the third peak profile.

It shall be understood that the method of FIG. 4 and the system shown in FIG. 1 could utilize one or more computing devices including a processor having a memory.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system (100) for measuring a dynamic pressure in a gas using a tunable diode laser (120), the system (100) comprising:

   a laser transmission system (102) that includes the tunable diode laser (120) and configured to transmit laser light created by the tunable diode laser (120) through the gas;
   a laser receiving system (104) configured to receive the laser light after it has passed through the gas to create absorption peaks from the received laser light, the laser receiving system (104) configured to estimate a change in pressure based on an expansion of one of the absorption peaks.

2. The system (100) of claim 1, wherein the laser transmission system (102) and the laser receiving system (104) are both coupled to a sample chamber through which the gas flows.

3. The system (100) of claim 2, wherein the sample chamber is formed as part of a turbine.

4. The system (100) of any of claims 1 to 3, wherein the tunable diode laser (120) produces laser light around three different frequencies including first, second and third frequencies.

5. The system (100) of claim 4, wherein absorption peaks related to the first and second frequencies are utilized to estimate temperature and a change in the absorption peak of the third frequency is utilized to estimate the change in pressure.

6. The system (100) of claim 4 or 5, wherein the first, second and third frequencies have non-overlapping absorption peaks in the gas.

7. The system (100) of any of claims 4 to 6, wherein the light at the third frequency has a wavelength between $1.3\mu m$ and $1.4\mu m$.

8. The system (100) of any of claims 1 to 7, wherein the laser receiving system (104) estimates the change in pressure based on the expansion of one of the absorption peaks and an estimated temperature formed based on a difference in lines strengths of two other absorption peak profiles.

9. The system (100) of any of claims 1 to 8, wherein the laser transmission system (102) includes:

   a laser input; and
   an input selection coupled between the tunable diode laser (120) and the laser input to select a one of the frequencies of laser light to provide to the laser input.

10. A method of measuring temperature and pressure of a gas using a tunable diode laser (120), the method comprising:

   passing laser light having three different frequencies through the gas (406);
   measuring the intensity of the laser light at each of three different frequencies after it has passed through the gas (408);
   forming a first, second and third peak profile from the measured intensities (410);
   determining the line strength for the first and second peak profiles (412); and
   estimating a dynamic pressure change of the gas based on changes in the width of the third peak profile (414,416).

**11.** The method of claim 10, wherein the laser light is created by the tunable diode laser (120).

**12.** The method of claim 10 or 11, wherein the gas is flowing through a turbine.

**13.** The method of any of claims 10 to 12, further comprising:

estimating a temperature of the gas based on the difference in lines strengths of the first and second peak profiles; and
adjusting a center frequency of the third peak profile based on the estimated temperature.

**14.** The method of any of claims 10 to 13, wherein estimating the pressure includes determining a change in a full width at half maximum of the third profile.

FIG. 1

**FIG. 2**

**FIG. 3**

START

PROVIDE LIGHT THROUGH GAS — 406

MEASURE INTENSITY OF LIGHT PASSING THROUGH GAS — 408

CREATE PEAK PROFILES — 410

COMPARE LINE STRENGTHS OF TWO OF PROFILES TO ESTIMATE TEMPERATURE — 412

DE-CONVOLVE ONE OF THE PEAK PROFILES TO ESTIMATE $\Delta V_C$ — 414

FIND CHANGE IN PRESSURE BASED ON $\Delta V_C$ — 416

ESTIMATE DYNAMIC & STATIC PRESSURE — 418

END

FIG. 4